# EUROPEAN PATENT SPECIFICATION

(11) **EP 2 375 120 B1**
(45) Date of publication and mention of the grant of the patent: **19.09.2012**
(21) Application number: 11172905.9
(22) Date of filing: 08.10.2007
(51) Int. Cl.: F16M 11/12, F16M 11/24, B25J 9/10

(54) **Support arm**
Tragarm
Bras de support

(30) Priority: 06.10.2006 NL 2000262; 20.02.2007 US 707859
(43) Date of publication of application: 12.10.2011
(62) Divisional of application: 07834625.1
(73) Proprietor: Stichting Escrow TV-Motions, 3421 CV Oudewater (NL)
(72) Inventor: Stoelinga, Dirk Jan, 3762 EV Soest (NL)
(74) Representative: Swinkels, Bart Willem

(56) References cited:
- EP-A1- 0 554 711
- EP-A1- 0 866 238
- US-A- 3 108 498
- US-A- 3 660 917
- US-A- 5 470 283

## Description

### Background of the invention

The invention relates to a support arm for an apparatus, preferably a display screen, specifically a flat display screen.

Such a support arm is known from EP-A2-1.312.852 and GB-2.416.062, for instance. These arms have a first member which is pivotally connected to a second member. The arms are not specifically suited for mounting a flat screen to for instance a wall. Due to their construction, these arms leave a substantial distance between a flat screen and a wall when the arm is in its folded position.

Another arm is disclosed in US-5321579. In its folded position, this arm is very flat, holding a flat screen almost against a wall. This arm, however, needs to be mounted underneath a flat screen of flat panel display.

US-4.170.336 discloses a suspension arm for an operating room microscope. These microscopes are not very heavy. Furthermore, these arms are very difficult to automate.

US-5.332.181 discloses a motorised stand for a medical instrument. It has several members which are connected via hinges or rotary joints. The nature of these joints is not disclosed. Furthermore, the purpose of that support arm is to provide optimal manoeuvrability. Full stabilization under heavy loads may prove difficult.

EP-A2-1.471.300 discloses an arm for supporting a flatscreen. It has several members which are mutually connected via hinges. In particular, the fastening part for attaching a flat screen to the arm is described. That fastening part can be attached to the back of a flat screen, detachably connected to an end of the arm, and provide possibilities for tilting the flat screen.

It is difficult to automate the known support arms and they are not stable. Often, due to the weight in combination with the long arm which causes high torque, backlash will occur after some use.

### Summary of the invention

It is an object of the invention to provide a support arm which can be manufactured in a simple and inexpensive manner from components which can readily be obtained and modified.

It is another object of the invention to provide a support arm which can easily be automated.

It is another object of the invention to provide a support arm which is and remains stable, even with intense use.

To this end, the invention provides a support arm for a display screen according to claim 1.

Advantageous embodiments are disclosed in claims 1 and 2.

As a result of the positioning of the members with respect to one another and the use of the pivot joints, a support arm can be produced in a simple and inexpensive manner, which support arm is simple to operate and remains stable during operation, even with large and heavy display screens.

In this context, the term pivot joint is understood to mean a joint which connects two members to one another and allows for the two members to rotate with respect to one another, that is to say for two straight members which are in line with one another to pivot relative to one another about the longitudinal axis through the two members. This is in contrast with a hinge joint which allows for two members to hinge relative to one another.

EP 0 554 711 A1 discloses a motorized stand having fastening parts and members coupled by pivot joints for positioning of medical therapy and diagnostic instruments, not a support arm for a display screen. The publication further does not disclose a pivot joint having an electric motor and transmission according to the present invention.

US 3,108,498 discloses manipulator drives and a driving mechanism for such manipulators for handling of materials which are radioactive or toxic or which are situated in an environment to which a human operator cannot be exposed. The publication does not disclose a support arm , especially not a support arm for a display device. The publication may disclose a pivot joint having an electric motor, but at least not with a transmission according to the present invention.

EP 0 866 238 A1 discloses a transmission providing a speed reduction, but which functions in another manner than the transmission according to the invention. The publication discloses a drive shaft having an circular element mounted eccentrically thereon. The circular fits into a circular opening in a curved disk. The curved disk drives another shaft through bolts engaging with slots provided in the curved disk. Bolts fixed onto an external ring and provided around the curved disk function to have the curved disk follow a predetermined trajectory. They do not function for transmitting a driving force.

US 5,470,283 discloses a transmission, but with having an eccentric shaft mounted on a driving shaft. Axes of eccentric shaft and driving shaft are displaced with respect to one another. A gear wheel having external teething is provided around the eccentric shaft and drives a ring having internal teething. The transmission is therefore different from the transmission provided in the pivot joint according to the invention. US 3,660,917 provides a similar type of transmission for a drive unit in rotatable signs.

### Brief description of the drawings

The attached figures show various embodiments of a support arm and a pivot joint according to the invention, in which:
Fig. 1 shows a first embodiment of a support arm according to the invention;
fig. 2 shows an embodiment of a control device for the support arm from Fig. 1;
fig. 3 shows a side view of an electric motor with a transmission for the support arm from Fig. 1;
fig. 4 shows a front view of Fig. 3;
fig. 5 shows an exploded view of Fig. 3;
fig. 6 shows an alternative embodiment of a support arm according to the invention;
fig. 7 shows the support arm from Fig. 6 in a tilted position and moved forward;
fig. 8 shows the support arm from Fig. 7 tilted towards the other side;
fig. 9 shows an alternative pivot joint;
fig. 10 shows an alternative embodiment of a support arm in top view, moved forward and in a tilted position;
fig. 11 shows the arm of fig. 10 in side view;
fig. 12 shows the arm of fig. 10 in almost completely folded position;
fig. 13a shows one of the hinges of the arm of fig. 10 in the cross section XIIIa as indicated on fig. 12;
fig. 13b shows an other of the hinges of the arm of fig. 10 in the cross section XIIIb as indicated on fig. 12;
fig. 13c shows the cross section XIIIc indicated in fig. 12.

### Description of embodiments

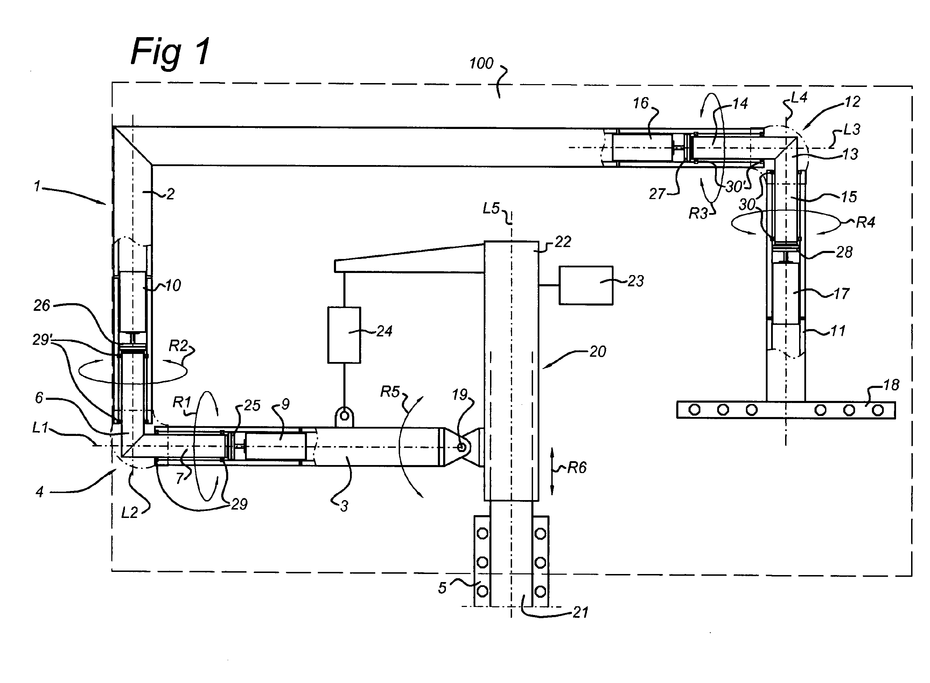

Fig. 1 shows a support arm 1, which is in this case provided with a flat LCD screen 2 which is indicated by means of dashed lines. The support arm 1 is provided with a first member 3 and a second member 2, which have a first longitudinal axis L1 and a second longitudinal axis L2, respectively. The first member 3 and the second member 2 are coupled to one another by means of two rotation joints 4, which connect the two members 3, 2 at an angle. The members 2, 3 are in this case connected at an essentially right angle. The first member 3 is coupled to a fastening part 5, in this case a fastening part for attaching the arm 1 on or against a wall. Alternatively, the support arm may also be attached to a floor or on or in a piece of furniture. A fastening part will be adapted to such a construction. For a person skilled in the art, the design of such a fastening part is simple. The members in this description are preferably round tubes.

The first pair of joints 4, which connects the first member 3 and the second member 2 to one another at an angle, makes it possible to carry out a rotation about the longitudinal axis L1. This rotation is indicated by R1. In addition, the pair of joints 4 makes a rotation about the axis L2 possible. This rotation is indicated by R2.

The first pair of joints 4 has an angle part 6, in this case an elbow, which connects the two joints to one another. The angle part is provided with a first end 7 and a second end 8. The first end 7 is coupled to the first member by means of a transmission 25 and is driven by means of a drive 9, in this case an electric motor, which in this case is also connected to the first member 3. In this embodiment, the first member 3 is designed as a hollow tube. The first end 7 is mounted rotatably by means of bearings 27 in this tube and forms the first pivot joint. The second end 8 of the angle part 6 is coupled to the second member 2 by means of a transmission 26 and the coupling is driven by a drive unit 10, likewise an electric motor, which in this case is also connected to the second member 2. The second member 2 is in this embodiment also designed as a tube, for example a round tube. The second end 8 of the angle element 6 is also mounted rotatably here by means of bearings 28 in the tube and thus forms the second pivot joint. As a result, the tube of the second member 2 can rotate about the longitudinal axis 2, which rotational movement, as mentioned earlier, is indicated by R2. The second member 2 is bent, in this case at an angle of 90°, and has a second part with a longitudinal axis L3. The end of that part of the second member 2 is provided with two pivot joints 12, which couple the end of the second member 2 to a third member 11 at an angle. The second pair of joints 12 is virtually identical to the first pair of joints 4.

The second pair of pivot joints 12 is connected to one another by means of an angle part 13, in this case also designed as an elbow made from tube parts, having a first end 14 and a second end 15. The third member 11 has a longitudinal axis, which is indicated by L4. The first end 14 of angle part 13 is coupled to the second member 2 by means of a coupling 27 and the coupling is driven by means of a drive unit 16, in this case once more an electric motor. The second end 15 of angle part 13 is coupled to the fourth member 11 by means of a transmission 28 and in this case the coupling is also driven by means of an electric motor 17. Driven by the drive units 16 and 17, the pair of joints is able to make a rotation about longitudinal axis L3 possible, this rotational movement is indicated by R3, and the pair of joints is able to make a rotation about longitudinal axis L4 possible, this rotational movement is indicated by R4.

In this embodiment, the third member 11 is designed as a tube part just like the other members, preferably a round hollow tube part. By means of bearings 29, the first end 14 of angle part 13 is rotatably mounted in the tube part, the bent tube part of the second member 2, which bent tube part has a longitudinal axis L3. As a result, a third pivot joint is formed and the third member can rotate about this longitudinal axis L3, which rotational movement is indicated by R3 in the figures. By means of bearing 30, the angle part 13 is rotatably mounted in the tube part of the third member 11 with its second end 15 and forms the fourth pivot joint, so that the tube part can rotate (R4) about its longitudinal axis L4.

In this embodiment, a fastening part 18 is fitted to the end of the third member 1 l, by means of which the LCD screen 2 can be attached to the arm. The person skilled in the art may, of course, also come up with and conceive other kinds of fastening.

In this case, the first member 1 is at one end connected by means of a hinge 19 to an actuator 20, which is provided with the abovementioned fastening parts 5. The hinge makes an angle adjustment of the first member 3, in particular of the longitudinal axis L1 thereof, possible. This angle adjustment is indicated in Fig. 1 by R5. The angle adjustment may be carried out by means of a drive unit 24, illustrated in the figure, which will be driven by means of an electric motor in one embodiment.

In the support arm, the pivot joints are formed by tubes mounted inside one another. By coupling the tubes to one another by means of a coupling and subsequently driving the coupling, for example by means of an electric motor, an operable support arm can be achieved.

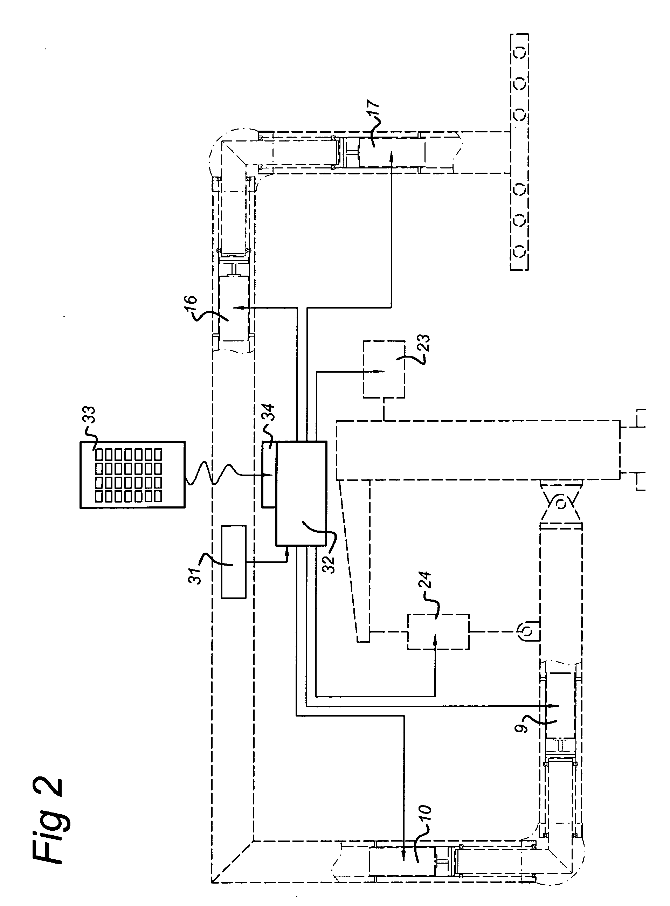

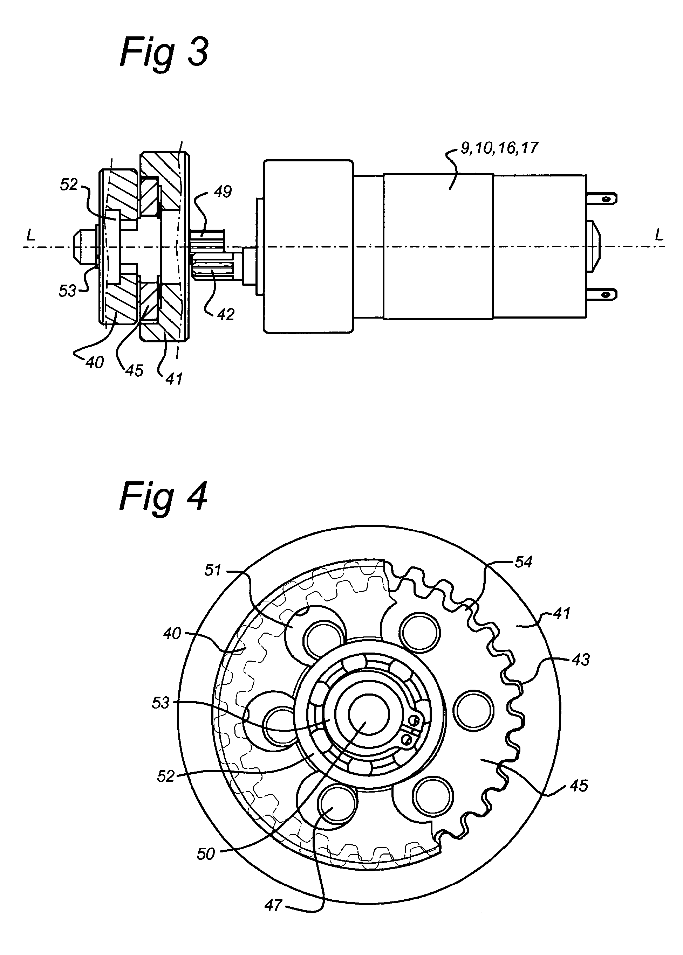

Figs. 3 to 5 show the electric motor, indicated in Figs. 1 and 2 by the numbers 9, 10, 16 and 17, provided with the coupling, indicated in Figs. 1 and 2 by numbers 25, 26, 27 and 28, in order to adjust the rotation joint or pivot joint. In Fig. 3, the longitudinal axis is indicated by L. This is the representation of the axes of rotation which are indicated in Fig. 1 by L1, L2, L3 and L4.

The coupling 25, 26, 27, 28 is driven by a toothing 42 of the drive shaft of the electric motor 9, 10, 16, 17 by means of a toothing 49.

The coupling is provided with a first ring 41, provided with an internal toothing 43 (see Fig. 4), then a gear wheel 45 provided with a toothing 54 (see Fig. 4 again) and a second ring 40. The first ring 41, gear wheel 45 and second ring 41 are mounted on a common shaft, the first ring 41 being mounted on the shaft by means of bearing 44, gear wheel 45 is mounted on the shaft eccentrically by means of eccentric or cam 48 and the second ring 40 is mounted on the end 50 of the shaft by means of bearing 52.

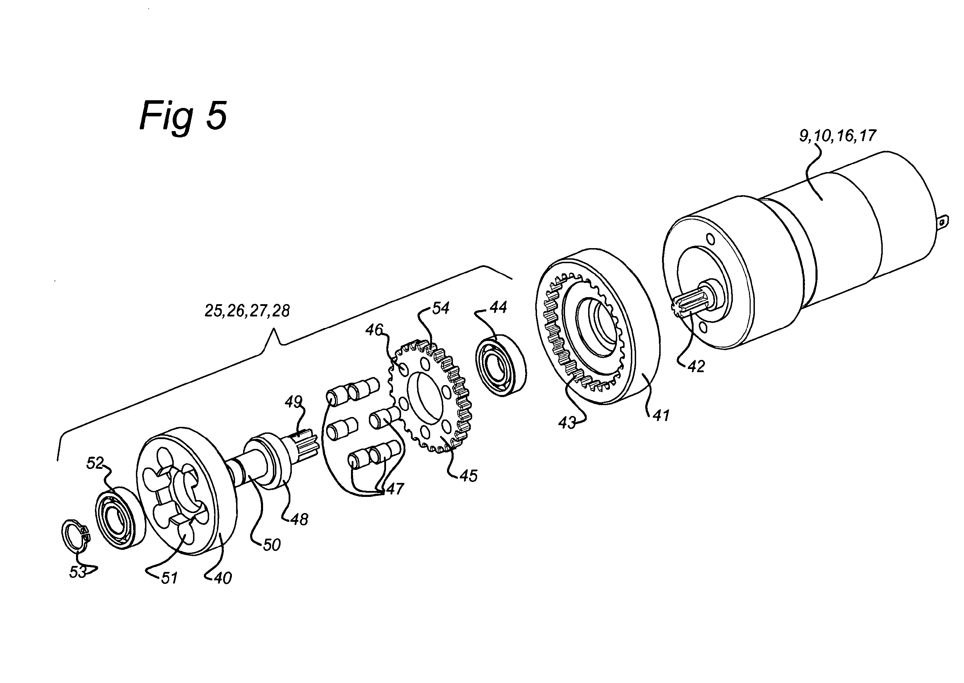

Fig. 4 shows a front view of the transmission with part of the ring 40 having been removed. In this figure, it can be seen that the toothing 54 of the gear wheel 45 has a toothing which differs only slightly (usually only by a few teeth) from the internal toothing 43 of the ring 41. The gear wheel 45 is provided with holes 46 which hold pins 47, the latter meshing with holes 51 in the ring 40. The pins 47 fit accurately into the holes 46 of gear wheel 45, and the diameter of the holes 51 in ring 40 is greater than the thickness of the pins 47. In the so-called exploded view of Fig. 5, this is all clearly illustrated.

Fig. 5 shows the transmission 25, 26, 27, 28 from Figs. 1 and 2 in exploded view. In this case, it can be seen that the toothed shaft 42 of the electric motor engages with a toothed drive shaft 49 of the transmission. Furthermore, this drive shaft is provided with an eccentric or eccentric cam 48 and an end shaft part 50. The first ring 41 is in this case mounted on a bearing 44 on the drive shaft. As is clearly illustrated here, the gear wheel 45 is provided with holes 46 into which pins 47 extend. These pins 47 furthermore extend into openings 51 of the ring 40. The ring 40 is mounted on the end 50 of the drive shaft of the transmission by means of the bearing 52, and held on this shaft by means of retaining ring 53. The cam bears against the interior of the hole in gear wheel 45 in such a manner that a part of the toothing of gear wheel 45 engages with the internal toothing 43 of the first ring 41.

The operation of the coupling 25, 26, 27, 28 is as follows. The toothed drive shaft 42 transmits the rotation of the electric motor onto the shaft of the coupling by means of the toothing 49, as a result of which this shaft will start to rotate. The gear wheel 45 is mounted on the eccentric or cam 48 and will therefore perform an eccentric rotation. The cam is designed in such a manner that the gear wheel will in each case run in part of the inner toothing 43 of the ring 41. The rotation of the gear wheel 45 will subsequently be transmitted to the ring 40 by means of the pins 47.

With the use as described in Fig. 1, the first ring 41 is connected inside the outer tube 2, 3, 11 of Fig. 1. The second ring 40 is connected, for example, to an end of the inner tube, which is indicated in Fig. 1 by reference numerals 6, 7, 14, 15.

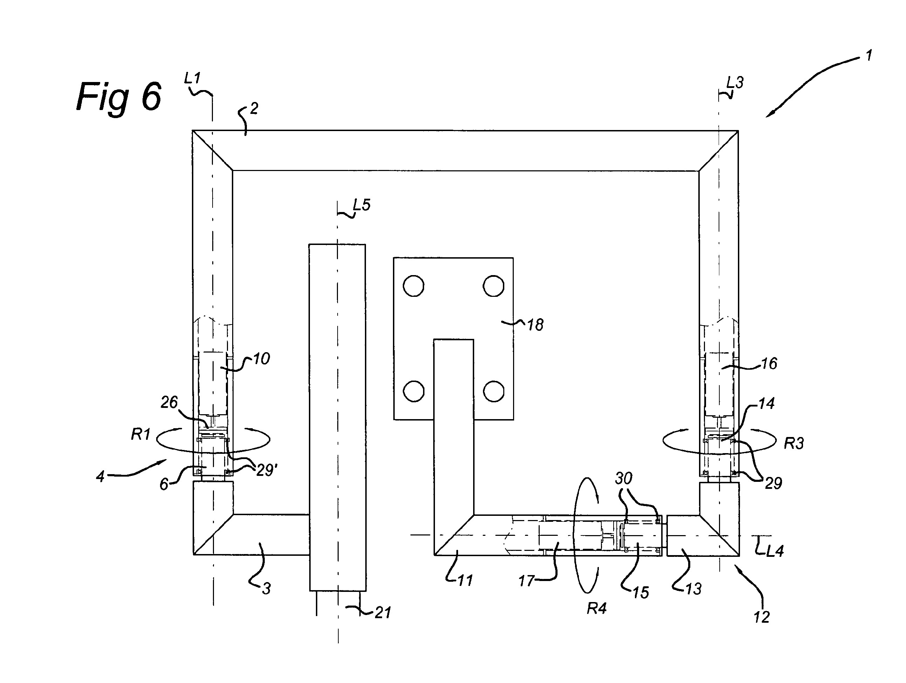

Fig. 6 shows an alternative configuration of a support arm according to the invention. In this case, the support arm 1 is provided with an L-shaped first member 3 which is attached here so that it can rotate about axis of rotation L5. Pivot joint 4 enables rotation R1 about axis of rotation L1. The second member 2 is U-shaped and has at its end a second pivot joint which enables rotation R3 about axis of rotation L3. Axes of rotation L1 and L3 are virtually parallel. By means of these axes of rotation, tilting of, for example, a flat display screen attached to the support arm about one of the axes L1 or L3 is possible. In addition, the display screen can be moved away from, for example, a wall to which the support arm is attached by means of an opposite rotation about the two axes of rotation. In this case, the orientation of the display screen will not change, that is to say the angle between L4 and L3 will in this case change little, if at all.

The display screen can tilt about an axis parallel to L4 by means of a rotation of the pivot joint about the axis L4. Thus, a display screen is completely adjustable for the viewer.

Pivot joints 12 are connected to one another by means of an elbow piece 13 which in this case has an angle of 90 degrees. As a result, axes L3 and L4 are at an angle of 90 degrees. In this embodiment, the adjustment about hinge 19 by means of, for example, an electric motor as actuator 24, as described in Fig 1, is not necessary.

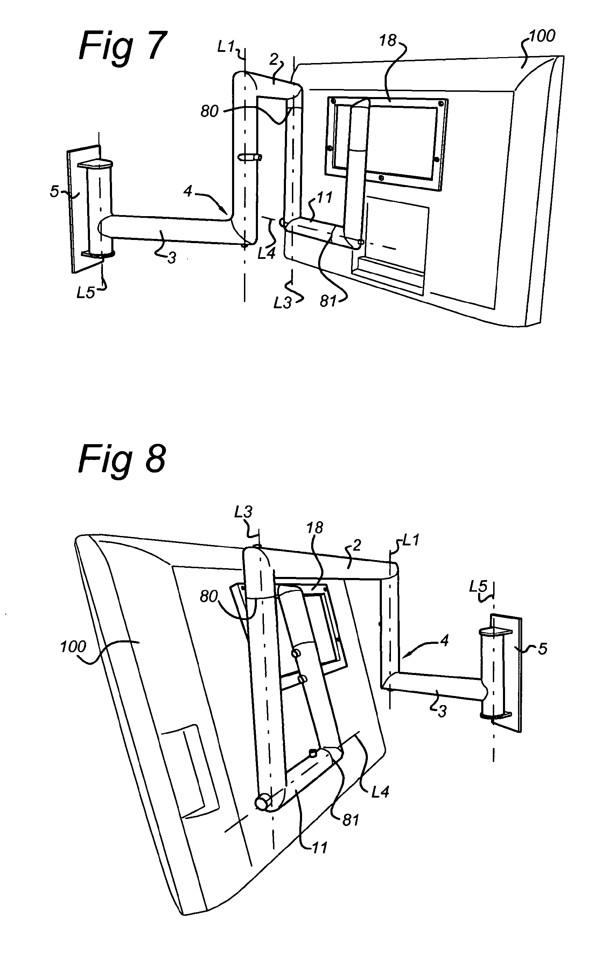

Fig. 7 shows an embodiment of a support arm for attachment to, for example, a wall. In this embodiment, the positions of the pivot joints have been selected somewhat differently from those in Fig. 6. One leg of the U-shaped member 2 is in this case shorter than the other leg, as a result of which the second pivot joint, indicated here by number 80, is situated at an earlier juncture in the support arm. In this embodiment, an L-shaped member is provided as from the second pivot joint, at the end of which a third pivot joint 81 is attached, which third pivot joint has a further L-shaped member to which the fastening part 18 is attached. In this case, a flat display screen is attached to the fastening part 18. The support arm is shown here in a position in which it has been rotated about axes L5, L1 and L3. By fitting more members and pivot joints, the distance of displacement from the wall can be increased further, as long as the axes of rotation are parallel to L5, L1 and L3, so that the display screen remains horizontal.

The display screen can furthermore be titled about the axis of rotation L4. Fig. 8 shows the support arm from Fig. 7 tilted about this axis of rotation L4.

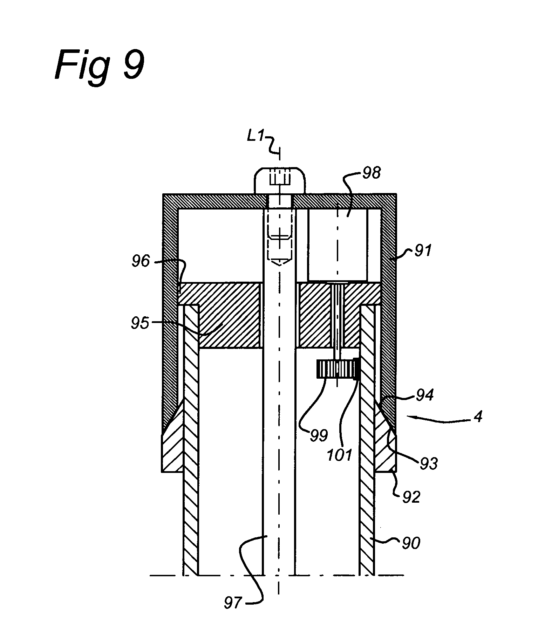

Fig. 9 shows an example of a pivot hinge or pivot joint (not part of the invention). In this case, an inner tube 90 is partly accommodated inside an outer tube 91. The outer tube illustrated here has a limited length. A ring 92, preferably made of plastic such as nylon, is arranged around the outer tube 91 and has an end of the outer tube mounted on it. In order to ensure the outer tube is mounted without any play, the edge 93 of the ring 92 is bevelled, as can be seen in the figure. The end of the outer tube 91 also has a bevelled edge 94 which fits onto the bevelled edge 93 of the ring 92. In order to provide further stability and improve the mounting, the end of the inner tube 90 which extends into the outer tube 91 is provided here with an insert 95, an edge 96 of which extends outside the outside wall of the inner tube 90 up to the inner wall of the outer tube 91. The outer tube 91 is pulled onto the bevelled edge 93 of the plastic ring 92 by means of a tie rod 97. For automation, the outer tube 91 is in this case also provided with an electric motor 98, the drive shaft of which extends through the insert and provided with a gear wheel 99 which engages with a (curved) gear rack 101 on the inside of the inner tube 90. Of course, it is also conceivable to change this configuration around, that is to say to mount the electric motor inside the inner tube and the gear rack (or a ring provided with internal toothing) in the outer tube.

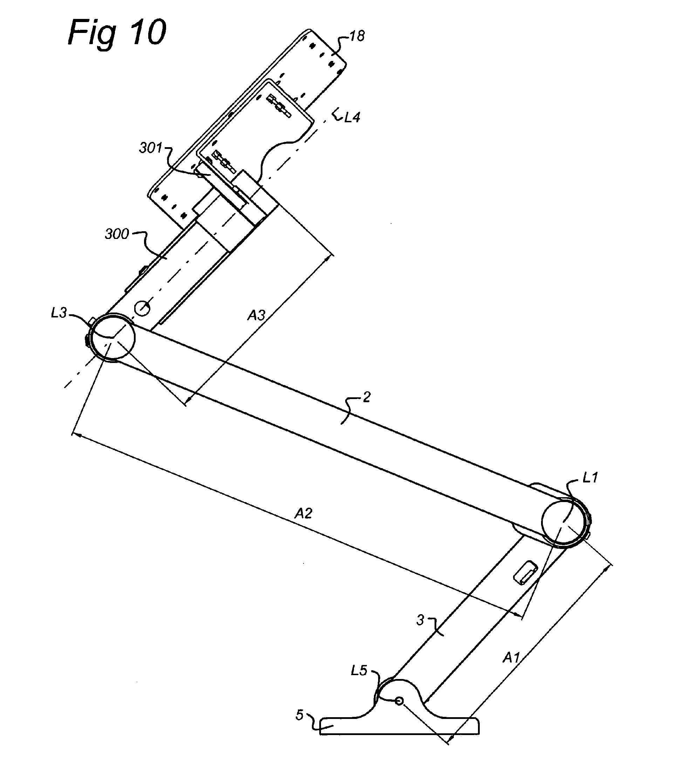

In fig. 10, an alternative embodiment for a support arm is shown. Again, this support arm can very easily be provided with actuators, mostly electro motors, which as can be seen later on are provided with gearing and transmission. The specific hinges and construction make it possible to use the support arm without actuators, and/or to build these actuators in at a later stage. Again as before, identical reference numbers refer to similar features.

Furthermore, the support arm can be folded between a support wall and for instance a flat screen in a very flat manner. In this embodiment, this is amongst other design choices, due to the selection of the lengths of the different members, their orientation and the way they are hinged.

In this example, not part of the invention, the lengths A1-A3 are chosen in such a way that the length A3 and A1 together are less than the length A2. In that way, the support arm in its folded position had a thickness which is about the thickness of the elements. Thus, a flatscreen will be very close to for instance a wall against which the support arm 1 is mounted.

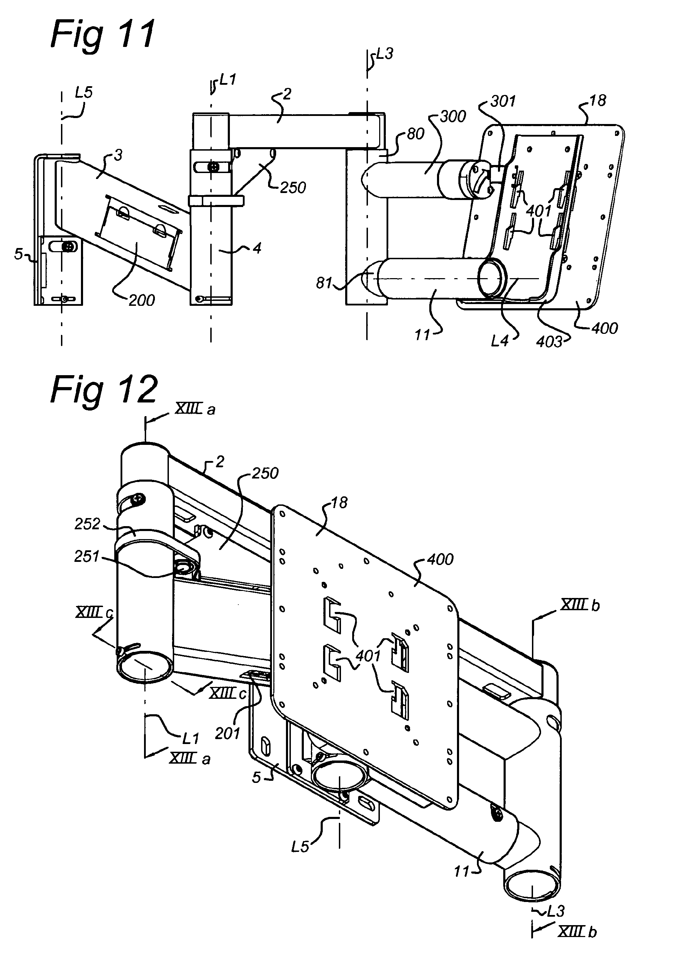

Fig. 11 is a side view of the support arm.

Fig. 11 also clearly shows an example of an attachment part 18 not part of the invention for a flatscreen, for instance. The attachment or fastening part 18 has a plate 400. Plate 400 has hooks 401 which can be hooked into slots in a further plate 403 which is fixed to outer tube 11 which forms a hinge for rotation around axis L4 with inner tube 81. The nature of such a hinge is shown in the drawings above, and can be featured as described in fig. 9.

The plate 400 can be tilted about axis L4 using a tilting actuator. The tilting actuator is here formed using for instance an electro motor in tube 300 which has a gearing and a bent or curved rack 300 which is at one side attached to plate 403 at a distance above the axis L4. The construction using tube 300 directs forces to tube 80. When no actuator is used, tube 300 with a gearing and rack 301 and a damper can provide support for manual tilting.

Element 2 has two tubes near the end or the upper beam which extend downward and form a U-shaped second member. Together with outer tubes 80 and 4 which is attached to element 3 hinges 4 and 80 are formed using the tubes positioned with coinciding longitudinal axes. The hinge attached to attachment or fastening plate 5 is here also formed using this principle of two tubes.

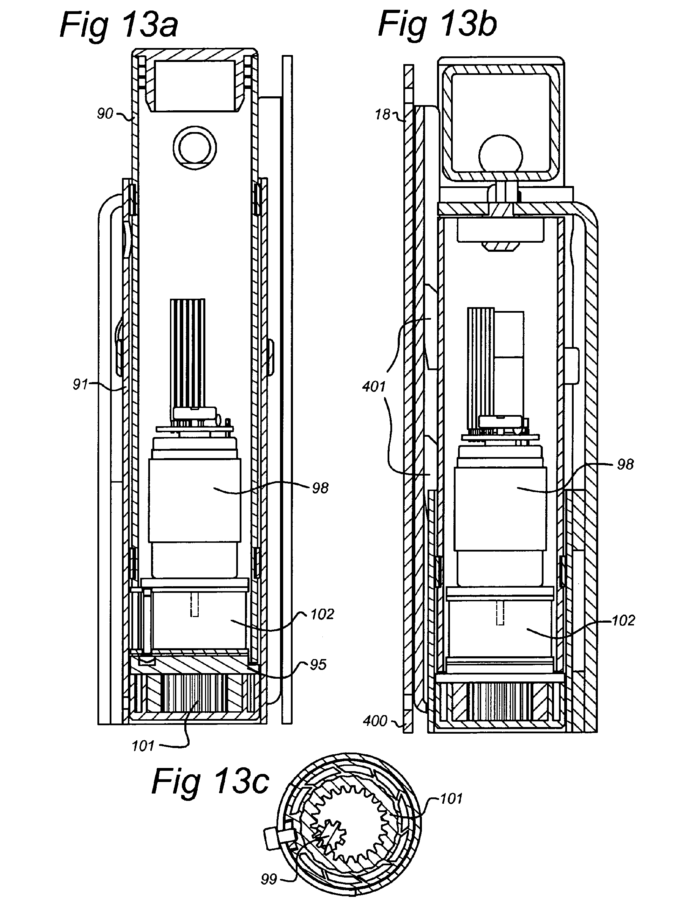

An example (not part of the invention) of the hinges 4 and 80 is detailed in figures 13a, 13b and 13c showing longitudinal and transverse cross sections indicated in fig. 12. an electromotor 98 is positioned with its rotational axis parallel to the rotational axes of the tubes. At its end, it has a transmission 102 and a driving shaft extending through emd plate 95 and ending in a gear wheel 99. The gear wheel 99 runs in a track or rack 101. The round rack 101 is here fitted into a (plastic) end cap which closes off the outer tube 91. Inner tube 90 is also closed off by an end cap. Fig. 13a shows hinge 4, and fig. 13b shows hinge 80.

It will be clear that the above description has been incorporated in order to illustrate the operation of the preferred embodiments of the invention and not in order to limit the scope of the invention. Based on the above explanation, many variations will be evident to the person skilled in the art which fall within the scope of the present invention.

## Claims

1. Support arm (1) for a display screen (100), comprising:
- a first fastening part (5) for attaching the support arm to a frame or wall;
- a first member (3), at one end coupled to the first fastening part (5) and at another end coupled to a first pivot joint (4) which allows rotation about a first axis of rotation (L1);
- a second member (2) which, at a first end, is coupled to the first pivot joint (4), and, at a second end, is provided with a second pivot joint (80) which allows rotation about a second axis of rotation (L3); and
- a second fastening part (18) for attaching the display screen (100) to the support arm (1), which second fastening part (18) is coupled to the second pivot joint (8),
the first and second axes of rotation essentially being parallel to one another, **characterised in that** one or both of said first and second pivot joints comprises
- a first tube part having a longitudinal axis (L),
- a second tube part, one end of which is rotatably mounted and extends into the first tube part, and provided with
- an electric motor (9; 10; 16; 17) attached in the first or second tube part, the first tube part and the second tube part being coupled to one another by means of a transmission (25; 26; 27; 28), the transmission being provided with
- a drive shaft, driven by means of the electric motor (9; 10; 16; 17) and in line with the longitudinal axis (L) and with
- a first ring (41) with internal toothing (43) thereon and which is connected to the one tube part,
- an eccentric gear wheel (45) with a toothing (54) which is at least one tooth smaller than the internal toothing (43) of the first ring (41) and the toothing of which engages with the internal toothing of the first ring and which is provided with first driver parts (46, 47), and
- a second ring (40) which is connected to the other tube part and which is provided with second driver parts (51) mating with the first driver parts (47) of the gear wheel (45), as a result of which the first and second ring rotate with respect to one another when the electric motor (9; 10; 16; 17) is in operation.

2. Pivot joint according to claim 1, in which the first ring (41) and the second ring (40) are mounted on the drive shaft of the transmission (25; 26; 27; 28).

3. Pivot joint according to claim 1 or 2, in which the gear wheel (45) is provided with pins (47) as first driver parts which extend into holes (51) in the second ring (40), which holes (51) have a larger diameter than the diameter of the pins (47).

## Patentansprüche

1. Tragarm (1) für einen Bildschirm (100), umfassend:
- ein erstes Befestigungsteil (5) zum Befestigen des Tragarms an einem Rahmen oder einer Wand;
- ein erstes Element (3), das an einem Ende mit dem ersten Befestigungsteil (5) und an einem anderen Ende mit einem ersten Drehgelenk (4), welches das Drehen um eine erste Drehachse (L1) ermöglicht, verbunden ist;
- ein zweites Element (2) welches an einem ersten Ende mit dem ersten Drehgelenk (4) verbunden ist und an einem zweiten Ende mit einem zweiten Drehgelenk (80), welches das Drehen um eine zweite Drehachse (L3) ermöglicht, versehen ist; und
- ein zweites Befestigungsteil (18) zum Befestigen des Bildschirms (100) am Tragarm (1), wobei das zweite Befestigungsteil (18) mit dem zweiten Drehgelenk (8) verbunden ist,
wobei die erste und zweite Drehachse im Wesentlichen parallel zueinander sind, **dadurch gekennzeichnet, dass**
eines oder beide der genannten ersten und zweiten Drehgelenke umfassen:
- ein erstes Rohrteil mit einer Längsachse (L),
- ein zweites Rohrteil von dem ein Ende drehbar aufgenommen ist und sich in das erste Rohrteil hinein erstreckt, und versehen ist mit
- einem Elektromotor (9; 10; 16, 17) der in dem ersten oder zweiten Rohrteil befestigt ist, wobei das erste Rohrteil und das zweite Rohrteil mittels eines Getriebes (25, 26, 27, 28) miteinander verbunden sind, wobei das Getriebe versehen ist mit
- einer Antriebswelle, die durch den Elektromotor (9, 10, 16, 17) angetrieben wird und in einer Linie mit der Längsachse (L) liegt, und mit
- einem ersten Ring (41) mit einer Innenverzahnung (43) darauf und welches mit dem ersten Rohrteil verbunden ist,
- einem exzentrischen Zahnrad (45) mit einer Verzahnung (54), die mindestens einen Zahn kleiner als die Innenverzahnung (43) des ersten Rings (41) ist, und dessen Verzahnung in die Innenverzahnung des ersten Rings eingreift und das mit ersten Antriebsteilen (46, 47) versehen ist, und
- einem zweiten Ring (40) der mit dem anderen Rohrteil verbunden ist und der mit zweiten Antriebsteilen (51) versehen ist, die mit den ersten Antriebsteilen (47) des Zahnrads (45) ineinandergreifen, mit dem Ergebnis, dass der erste und zweite Ring sich in Bezug zueinander drehen, wenn der Elektromotor (9, 10, 16, 17) in Betrieb ist.

2. Drehgelenk gemäß Anspruch 1, bei dem der erste Ring (41) und der zweite Ring (40) an die Antriebswelle des Getriebes (25, 26, 27, 28) befestigt sind.

3. Drehgelenk gemäß Anspruch 1 oder 2, bei dem das Zahnrad (45) mit Stiften (47) als erste Antriebsteile versehen ist, welche sich in Öffnungen (51) im zweiten Ring (40) erstrecken, wobei die Öffnungen (51) einen größeren Durchmesser als den Durchmesser der Stifte (47) aufweisen.

## Revendications

1. Bras support (1) pour un écran d'affichage (100) comprenant :
- un premier élément de fixation (5) pour fixer le bras support à un cadre ou à une paroi,
- une première pièce (3) dont une extrémité est accouplée au premier élément de fixation (5) tandis que son autre extrémité est accouplée à une première articulation à pivot (4) permettant sa rotation autour d'un premier axe de rotation (L1),
- une seconde pièce (2) dont une première extrémité est accouplée à la première articulation à pivot (4) et dont la seconde extrémité est équipée d'une seconde articulation à pivot (80) permettant sa rotation autour d'un second axe de rotation (L3), et
- un second élément de fixation (18) pour fixer l'écran d'affichage (100) au bras support (1), ce second élément de fixation (18) étant accouplé à la seconde articulation à pivot (80),
le premier et le second axe de rotation étant essentiellement parallèles,
**caractérisé en ce que**
l'une des articulation à pivot ou ces deux articulations comprend (comprennent) :
- une première partie tubulaire d'axe longitudinal (L),
- une seconde partie tubulaire dont une extrémité est montée à rotation et s'étend dans la première partie tubulaire, et est (sont) équipée(s) :
- d'un moteur électrique (9, 10, 16, 17) fixé dans la première ou dans la seconde partie tubulaire, la première partie tubulaire et la seconde partie tubulaire étant accouplées au moyen d'une transmission (25, 26, 27, 28), cette transmission étant équipée :
- d'un arbre moteur entrainé par le moteur électrique (9, 10, 16, 17) et aligné avec l'axe longitudinal (L),
- une première bague (41) équipée d'une denture interne (43) et reliée à l'une des parties tubulaires,
- une roue de transmission excentrique (45) équipée d'une denture (54) qui comporte au moins une dent de moins que la denture interne (43) de la première bague (41), dont la denture vient en prise avec la denture interne de la première bague et qui est équipée de premiers moyens d'entrainement (46, 47), et
- une seconde bague (40) qui est reliée à l'autre partie tubulaire et est équipée de seconds moyens d'entrainement (51) appariés aux premiers moyens d'entrainement (47) de la roue de transmission (45) de sorte que la première bague et la seconde bague se déplacent en rotation l'une par rapport à l'autre lorsque le moteur électrique (9, 10, 16, 17) est en fonctionnement.

2. Articulation à pivot conforme à la revendication 1, dans lequel la première bague (41) et la seconde bague (40) sont montées sur l'arbre moteur de la transmission (25, 26, 27, 28).

3. Articulation à pivot conforme à la revendication 1 ou 2, dans lequel la roue de transmission (45) est équipée de broches (47) constituant les premiers moyens d'entrainement qui s'étendent dans des trous (51) de la seconde bague (40), ces trous (51) ayant une diamètre supérieur au diamètre des broches (47).
